# EUROPEAN PATENT SPECIFICATION

(11) **EP 0 846 047 B1**
(45) Date of publication and mention of the grant of the patent: **15.12.1999**
(21) Application number: 96929104.6
(22) Date of filing: 26.08.1996
(51) Int. Cl.: B29C 45/26, B29C 45/40

(54) **RECONFIGURABLE MOLD HAVING TRAVELLING EJECTOR SYSTEM**
REKONFIGURIERBARE FORM MIT VERFAHRBAREM AUSWERFSYSTEM
MOULE POUVANT ETRE RECONFIGURE DOTE D'UN SYSTEME D'EJECTEUR MOBILE

(30) Priority: 25.08.1995 US 3554
(43) Date of publication of application: 10.06.1998
(73) Proprietor: THE WHITAKER CORPORATION, Wilmington, DE 19808 (US)
(72) Inventor: VANDERSANDEN, Louis, NL-5237 HR 's Hertogenbosch (NL)
(74) Representative: Heinz-Schäfer, Marion
(86) International application number: US9613923
(87) International publication number: WO9707956

(56) References cited:
- GB-A- 2 263 249
- US-A- 3 091 809
- US-A- 3 871 611
- PATENT ABSTRACTS OF JAPAN vol. 6, no. 260 (M-180) [1138] , 18 December 1982 & JP,A,57 152908 (MATSUSHITA DENKI SANGYO KK), 21 September 1982,
- PATENT ABSTRACTS OF JAPAN vol. 13, no. 338 (E-795) [3686] , 28 July 1989 & JP,A,01 098234 (NEC CORP), 17 April 1989,
- PATENT ABSTRACTS OF JAPAN vol. 18, no. 220 (M-1595), 20 April 1994 & JP,A,06 015685 (JAPAN STEEL WORKS LTD), 25 January 1994,

## Description

The present invention relates to injection molding apparatus for molding parts wherein the apparatus is reconfigurable by moving one portion of the mold with respect to a fixed portion to mold one of several different parts, and more particularly, to such apparatus having ejector elements that travel along with the portion of the mold that moves.

Molds for making injected molded parts are typically utilized in relatively high production environments where thousands of parts are molded in quick succession. These molds frequently are in continuous operation for days or weeks making the same part. When it is desirable to make a different part the mold is removed from the mold machine and replaced with a different mold. This, of course, means that the mold machine must be taken out of production while the molds are being changed. This usually does not cause an economic hardship because of the very large numbers of parts that are produced during the relatively long production cycle. The relatively short down time to change the molds is tolerable. However, when shorter production cycles are required because a smaller number of different parts is needed, the production down time needed for changing molds becomes more significant resulting in a greatly increased economic liability.

Reconfigurable molds are known that can be manipulated to mold different parts. These molds usually require that the mold be disassembled and mold sections either be added or subtracted. This, of course, requires that the mold machine be taken out of production while the mold is reconfigured. An example of this type of reconfigurable mold is disclosed in United States Patent Number 5,255,889 which issued October 26, 1993 to Collette et al. The '889 patent discloses a blow mold for making a beverage bottle, having upper and lower mold sections that are joined by various intermediate sections that can be added or removed from the middle to mold the desired size bottle. While some of the same mold parts are common to all parts that are molded, the reconfiguring process consumes a significant amount of time resulting in slowed production. As with most mold machines, after shutdown of the machine to reconfigure the mold, the machine must be purged of old mold material. When the machine is again brought on line, the first several molded parts usually must be discarded until the process restabilizes. Another example of a reconfigurable mold is disclose in United States Patent Number 4,861,534 which issued August 29, 1989 to Boehm et al. This mold is for molding circuit boards and utilizes a single mold cavity with an array of core pins that are selectively retractable from the cavity. By allowing only the core pins that are required to produce the desired hole pattern in the circuit board to remain in the mold cavity and retracting all others, any desired hole pattern may be produced in the circuit board. However, when a circuit board of different size is required, the mold must be changed.

The patent publication GB 2,263,249 discloses an injection molding machine provided with relatively movable first and second mold support structures. Each of the support structures are provided with removably mounted mold devices having oppositely facing molding surface portions. The mold devices each include an ejection mechanism having a movable ejection member, actuated by a control mechanism of the assembly, to project through a molding surface portion of the mold device to displace therefrom a molded product.

Reconfigurable molds having movable mold bodies that can be automatically positioned to mold a particular part will require substantially no down time and will overcome many of the detriments of the prior art reconfigurable molds, as set forth above. However, when ejector elements are required to eject the molded part from the mold, such as when molding small complex electrical connector housings, it is difficult to provide the needed ejectors in the movable mold bodies.

What is needed is a reconfigurable mold having movable mold bodies that can be easily and automatically repositioned to make relatively small quantities of different parts while providing part ejectors that are operable in all molding positions of the movable mold bodies.

The invention comprises an apparatus for selectively molding one of a plurality of different molded parts, including a mold frame, an A-side frame coupled to said mold frame, and a B-side frame coupled to said mold frame. The apparatus includes a first mold body and a second mold body. One of the first and second mold bodies are selectably movable with respect to the other to a first position and to a second position where said third mold cavity is in communication with said first mold cavity. A traveling ejector is arranged in the B-side portion of the movable mold body and operable to eject the molded part when the one of the A-side frame and B-side frame has moved to the open position. The traveling ejector is operable when the movable mold body is in both the first and second positions, including an actuator for effecting the operation of the traveling ejector.

An embodiment of the present invention will now be described by way of example with reference to the accompanying drawings, in which:
FIGURE 1 is a front view of a mold machine incorporating the teachings of the present invention;
FIGURE 2 is a block diagram showing control functions of the machine shown in Figure 1;
FIGURE 3 is a cross-sectional view taken along the lines 3-3 in Figure 1;
FIGURE 4 is a cross-sectional view taken along the lines 4-4 in Figure 1;
FIGURE 5 is an enlarged view of a portion of that of Figure 3;
FIGURE 6 is an enlarged view of a portion of that of Figure 4;
FIGURE 7 is a cross-sectional view taken along the lines 7-7 in Figure 6;
FIGURE 8 is a cross-sectional view taken along the lines 8-8 in Figure 6;
FIGURE 9 is a cross-sectional view taken along the lines 9-9 in Figure 6; and
FIGURES 10 through 13 are schematic representations of the three mold bodies of Figure 6 shown in various operating positions.

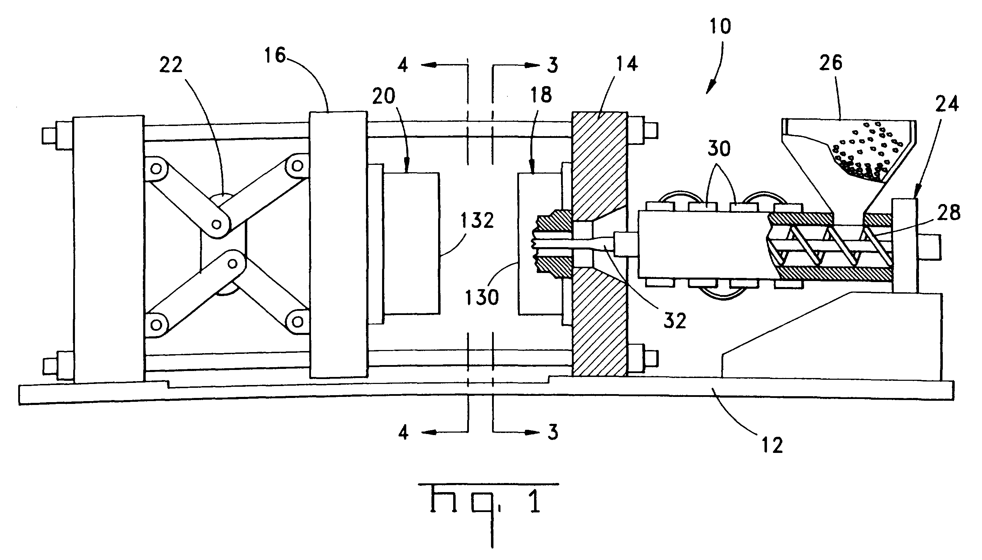

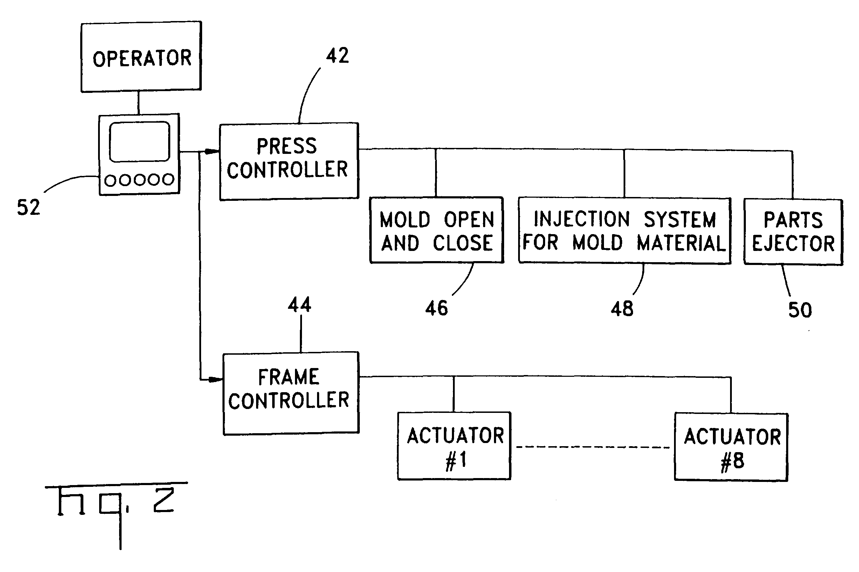

There is shown in Figure 1 a mold machine 10 having a machine frame 12, an A-side frame 14 fixed to the machine frame, and a B-side frame 16 that is coupled to the machine frame so that it can move toward and away from the A-side frame. An A-side mold assembly 18 is attached to the A-side frame 14 and a mating B-side mold assembly 20 is attached to the B-side frame, in the usual manner. The B-side frame 16 is moved by means of a toggle clamp 22 that is hydraulic or electrical powered. A mold material injection system 24 is attached to the machine frame 12 and arranged to inject mold material into the mold cavities in the mated A-side and B-side mold assemblies, as will be explained below. The injection system 24 includes a hopper 26 for holding plastic pellets, a rotating screw 28 for feeding the pellets and the molten plastic, heater bands 30 for heating the plastic to a molten state, and a nozzle 32 that directs the molten plastic directly into the A-side mold assembly 18. A block diagram is shown in Figure 2 showing the control functions of the mold machine 10. A press controller 42 and a frame controller 44 are interconnected to the machine 10. The press controller 42 controls various standard press functions such as opening and closing the mold, commanding the mold material injection system, and ejection of the finished molded parts, indicated in Figure 2 as 46, 48, and 50, respectively. The frame controller 44 is interconnected to both the A-side and B-side mold assemblies 18 and 20, respectively, and controls movement of the movable mold bodies when reconfiguring the mold, as will be explained below. An input/output terminal 52 is optionally interconnected with the press and frame controllers 42 and 44 so that an operator can manually enter mold configuration commands.

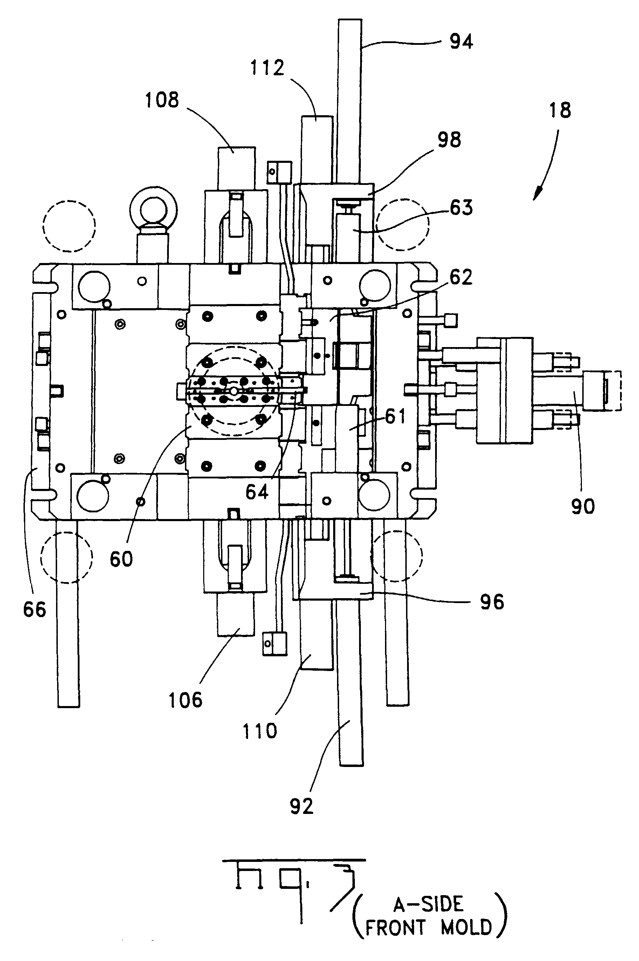

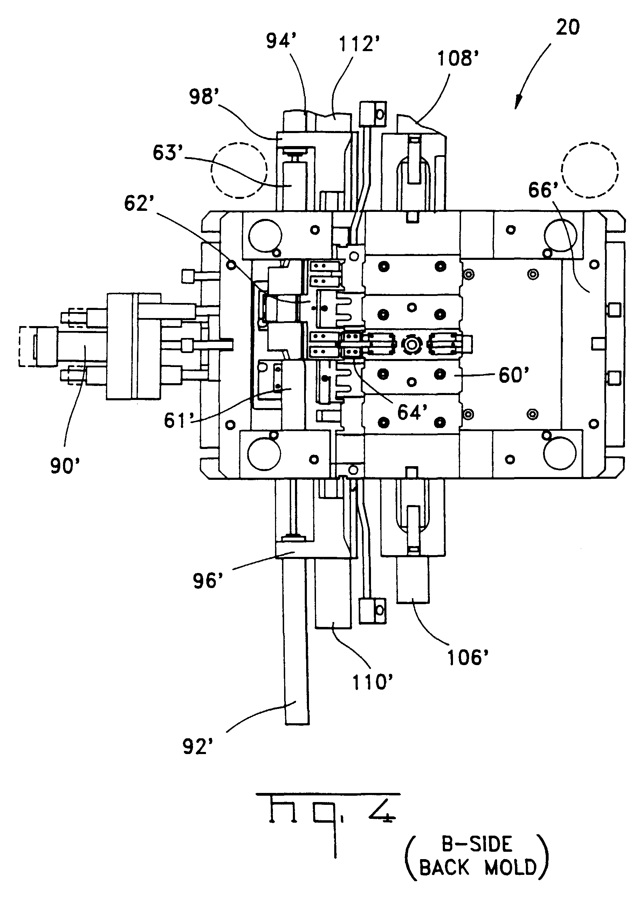

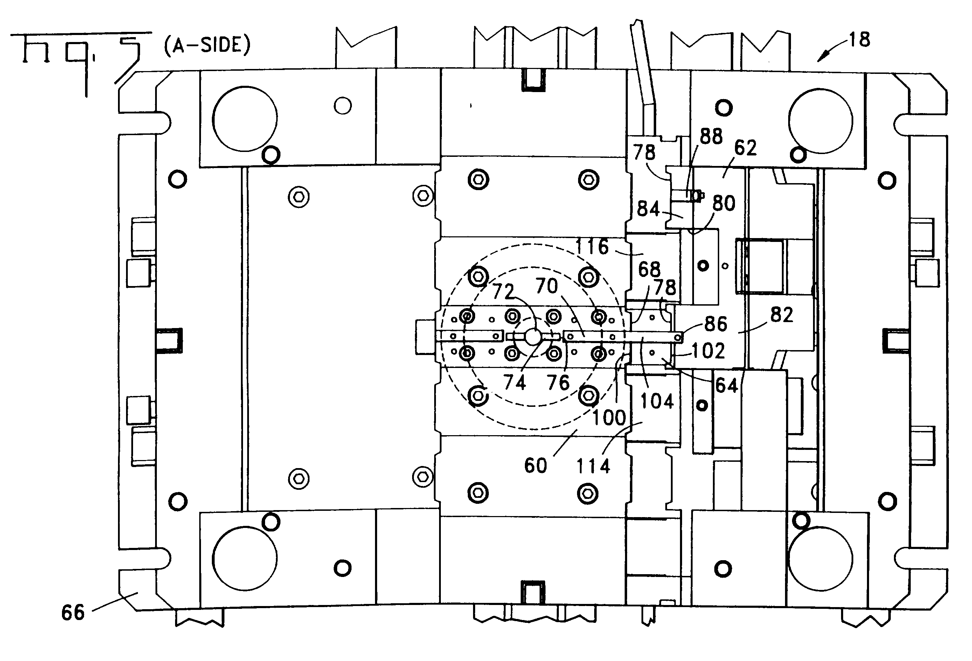

The A-side mold assembly 18, as shown in Figures 3 and 5, includes first, second, and third mold bodies 60, 62, and 64, respectively. The first mold body 60 is rigidly attached to a platen 66 that serves as a base for the A-side mold assembly 18. The second and third mold bodies 62 and 64 are slidingly coupled to the platen 66, as will be explained. As best seen in Figure 5, the first mold body 60 includes a first surface 68 and a first mold cavity 70 that intersects the surface 68. The nozzle 32 enters the center of the first mold body and terminates in a sprue 72 which is in communication with the mold cavity 70 by means of a runner 74 and tunnel gate 76, in the usual manner.

The second mold body 62 includes a second surface 78 that is parallel to the first surface 68 and opposed thereto, as shown in Figure 5. A cutout 80 is formed in the second surface 78 thereby forming two legs 82 and 84. The leg 82 includes a second mold cavity 86 and the leg 84 includes a third mold cavity 88, each of which intersects the second surface 78. The second mold body 62 is slidingly coupled to the platen 66 by any suitable means so that it is free to move both horizontally and vertically, as viewed in Figures 3 and 5. A first linear actuator 90, which in the present example is an air cylinder, is attached to the platen 66 and is slidingly coupled to the second mold body 62 so that upon operation of the actuator 90, the second mold body is made to move in either direction along a horizontal path, as viewed in Figure 3. A pair of opposing second and third linear actuators 92 and 94, which are air cylinders in the present example, are secured to mounting brackets 96 and 98 that are attached to the platen 66. The piston rods of the two actuators 92 and 94 are coupled to opposite sides of the second mold body 62 through two slide bars 61 and 63 which abut against the second mold body 62 so that the second mold body can be made to move in either direction along a vertical path, as viewed in Figure 3.

The third mold body 64 includes third and fourth parallel surfaces 100 and 102, respectively. A fourth mold cavity 104 extends through the third mold body 64 intersecting the two surfaces 100 and 102. The third mold body 64 is slidingly coupled to the platen 66 by any suitable means so that it is free to move both horizontally and vertically, as viewed in Figures 3 and 5. Fourth and fifth linear actuators 106 and 108, which in the present example are air cylinders, are attached to the platen 66 and are coupled through a pivoting linkage, not shown, to the third mold body 64 so that upon operation of the actuators, the third mold body 64 is made to move toward the right, as viewed in Figure 3, toward the first actuator 90. A pair of opposing sixth and seventh linear actuators 110 and 112, which are air cylinders in the present example, are secured to mounting brackets 96 and 98. The piston rods of the two actuators 110 and 112 are slidingly coupled to opposite sides of the third mold body 64 so that by varying the relative pressure in the two actuators, the third mold body can be made to move in either direction along a vertical path, as viewed in Figure 3, and parallel to the first surface 68. The third mold body 64 includes two opening 114 and 116 that extend completely through the body 64 intersecting the third and fourth surfaces 100 and 102, for a purpose that will be explained.

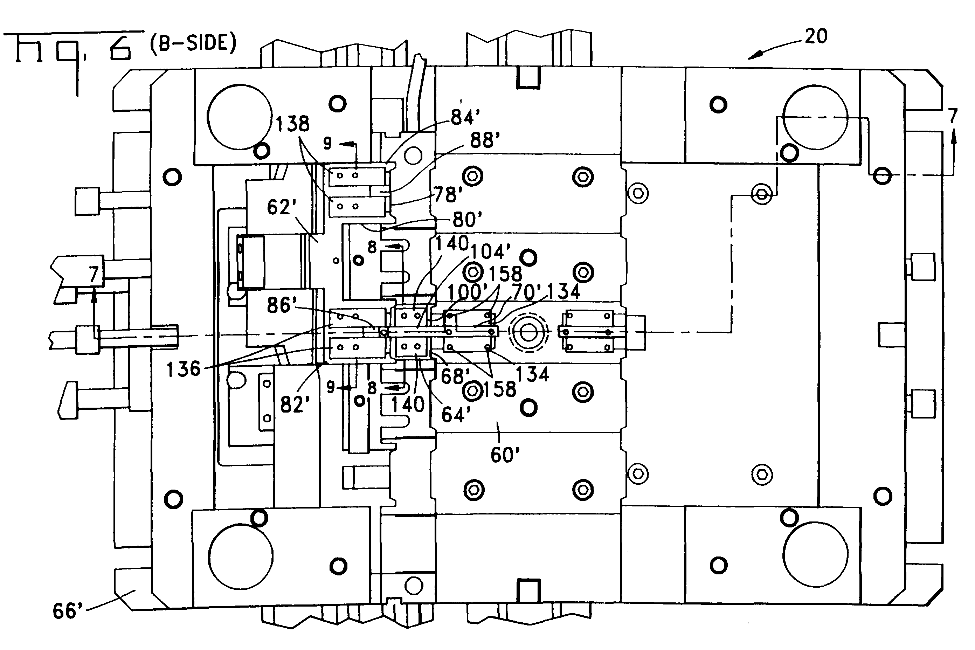

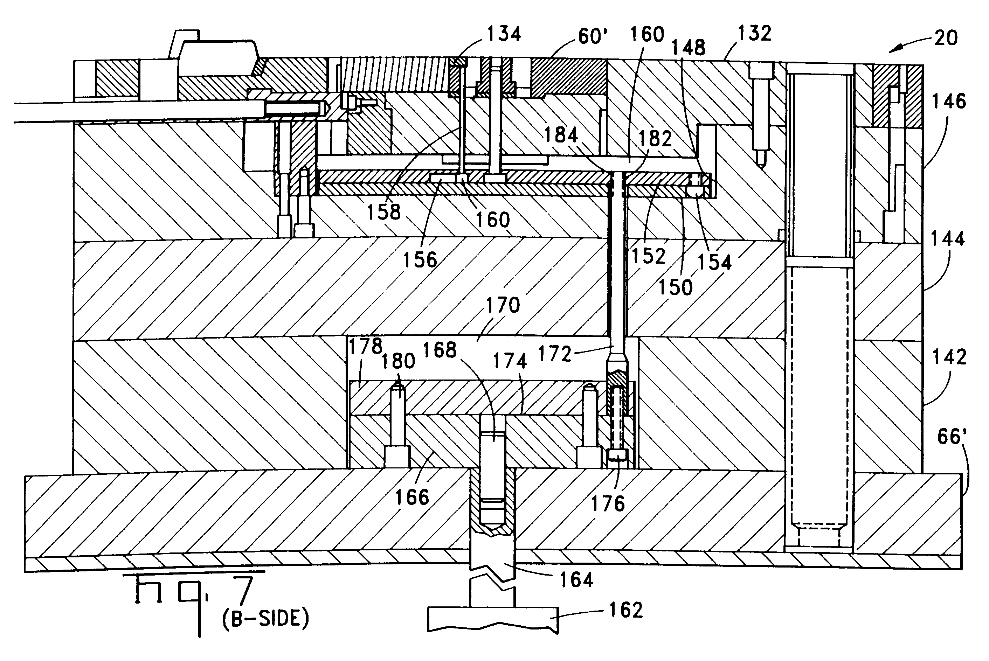

The B-side mold assembly 20, as viewed in Figures 4 and 7, have first, second, and third mold bodies that mate with the first, second, and third mold bodies 60, 61, and 62 of the A-side assembly 18, and have similar identifying part numbers that are primed. That is, the first, second and third mold bodies of the B-side are identified by the part numbers 60', 62', and 64', respectively. Additionally, other features of the B-side mold assembly that have substantially similar corresponding features on the A-side will be identified with a primed version of the A-side part number, even though the corresponding features may be somewhat different. The second and third mold bodies 62' and 64' are arranged to move both horizontally and vertically, as viewed in Figure 4, in a manner similar to the mold bodies 62 and 64, by means of first, second, third, fourth, fifth, sixth, and seventh actuators 90', 92', 94', 106', 108', 110', and 112', respectively. The outer surfaces of the A-side mold bodies 60, 62, and 64 are mutually coplanar and are collectively identified by the number 130 in Figure 1, this collective surface being the parting line of the mold. The opposing surfaces of the B-side mold bodies 60', 62', and 64' are also mutually coplanar and parallel with the surface 130 and are collectively identified by the number 132 in Figure 1. The collective surfaces 130 and 132 are in sealing mated engagement during the actual molding process, as will be explained.

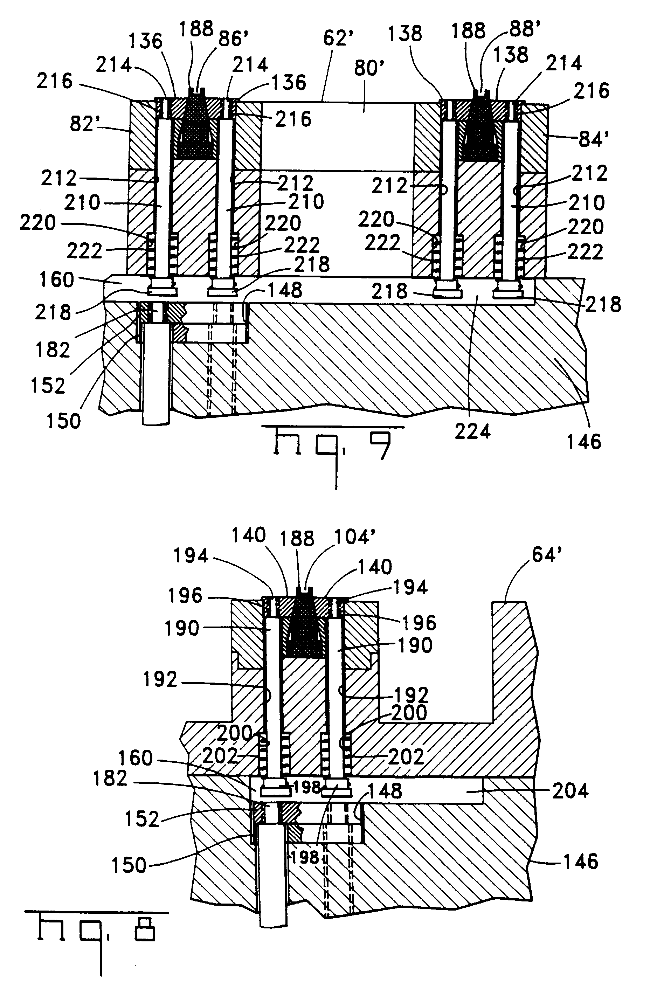

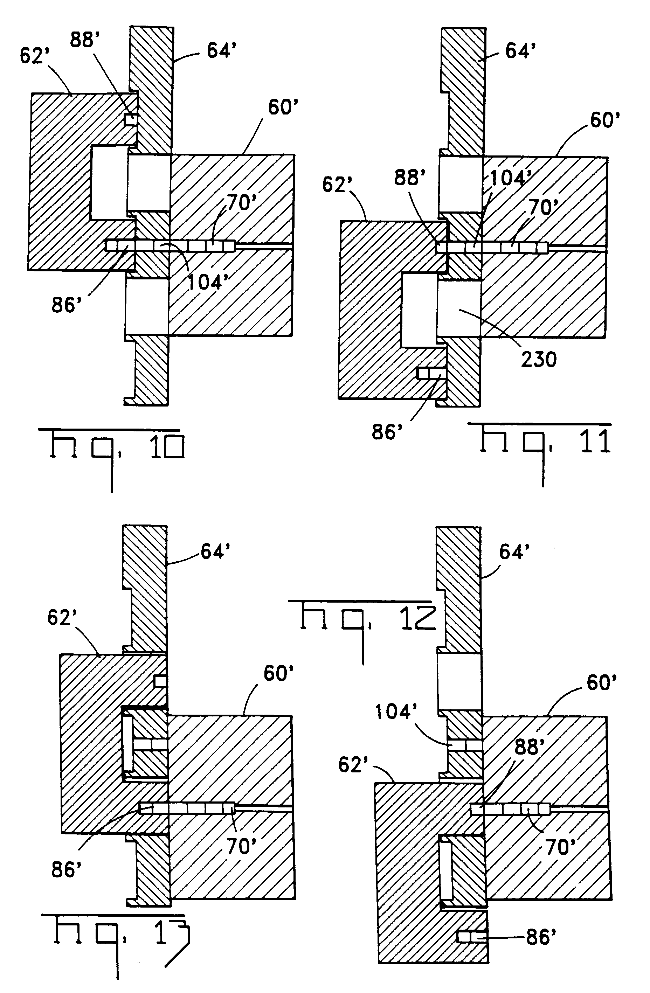

The B-side mold assembly 20 includes a traveling ejector element system for ejecting the molded part that is functional when the second and third mold bodies are in any of their four operative positions. These four operative positions are schematically shown in Figures 10 through 13 and will be described below. The ejector system, as shown in Figures 6, 7, 8, and 9, includes a first pair of opposing ejector rails 134 coupled to the first mold body 60', two second pairs of opposed ejector rails 136 and 138 coupled to the two legs 82' and 84', respectively, of the second mold body 62', and a third pair of opposed ejector rails 140 coupled to the third mold body 64'. The ejector rails 134, 136, 138, and 140, are actuated by means of an actuating mechanism that is best seen in Figure 7. As shown in Figure 7, the B-side mold assembly includes three stacked plates 142, 144, and 146, that are secured to the platen 66'. The plate 146 includes an elongated opening 148 containing a pair of pusher plates 150 and 152 that are secured together by means of eight screws 154 that are threaded into holes in the plate 152. A pair of mutually parallel T-slots 156 are formed in the undersurface of the plate 152 in vertical alignment with the two ejector rails 134. A pair of ejector rail pins 158 having enlarged heads 160 are disposed in each of the T-slots, the pins extending upwardly through holes in the plate 146 and aligned holes in the first mold body 60', terminating in threaded holes in the ejector rails. The enlarged heads 160 hold the ejector rail pins captive within the T-slots. The opening 148 is deep enough in the plate 146 so chat a space 160 exists above the top surface of the pusher plate 152. The two pusher plates 150 and 152 are arranged to move vertically within this space 160. As the pusher plates move upwardly, as viewed in Figure 7, the four ejector rail pins 158 are moved axially upwardly thereby moving the attached ejector rails upwardly as well. When the pusher plates are moved downwardly to the position shown in Figure 7, the ejector rails 134 are pulled downwardly too because the ejector rail pins 158 are held captive within the T-slots 156. The two pusher plates 150 and 152 are moved vertically by means of a hydraulic cylinder 162 which is attached to the B-side frame 16. The cylinder 162 includes a piston rod 164 that is coupled to a drive plate 166 by means of a pin 168. The drive plate 166 is disposed within an opening 170 in the plate 142 arranged in vertical alignment with the center of the pusher plates 150 and 152, as shown in Figure 7. Four push rods 172 are attached to the upper surface 174 of the drive plate 166 by means of screws 176 that are threaded into the ends of the push rods. The push rods are accurately located by means of a locating plate 178 that is attached to the drive plate 166 by means of screws 180, the push rods extending upwardly, as viewed in Figure 7, through holes in the two plates 144 and 146 and the lower pusher plate 150. The ends of the push rods have reduced diameters 182 that are threaded into holes in the upper pusher plate 152 so that their shoulders 184 are secured tightly against the lower surface of the upper pusher plate. When the piston rod 164 of the hydraulic cylinder 162 is extended, the drive plate 166 is moved upwardly in the opening 170, as viewed in Figure 7, so that the push rods 172 move the pusher plates 150 and 152 upwardly thereby moving the ejector rail pins 158 and attached ejector rails 134 upwardly to eject the molded part from the first mold cavity 70'.

Since the second and third mold bodies 62' and 64' are movable with respect to the first mold body 60' to different operating positions, ejector rail pins similar to the ejector rail pins 158 are not suitable for operating the ejector rails 136, 138, and 140. In this case, traveling ejector rail pins are needed. As best seen in Figure 8, the two ejector rails 140 straddle the fourth mold cavity 104' of the third mold body 64'. Note that the mold cavity 104' contains mold cores 188 in the usual manner. Two pair of traveling ejector rail pins 190 extend vertically through holes 192 formed in the third mold body 64' and include reduced diameters 194 that are threaded into holes in the ejector rails 140 so that their shoulders 196 are secured tightly against the under surfaces of the ejector rails. There are two ejector rail pins 190 attached to each ejector rail 140. Each ejector pin 190 includes an enlarged head 198 that extends into the space 160 vertically above the pusher plate 152, as shown in Figure 8. The holes 192 include counterbores 200 containing compression springs 202 that push against the enlarged heads 198 thereby urging the traveling ejector rail pins downwardly, as viewed in Figure 8, toward the pusher plate 152. As the pusher plate 152 is moved upwardly by the hydraulic cylinder 162 to actuate the ejector rails 140, the pusher plate engages the enlarged heads 198 and pushes the ejector rail pins and attached ejector rails 140 upwardly against the resistance of the springs 202, thereby ejecting the molded part from the mold cavity 104'. The plate 146 includes a space 204 that is a lateral extension of the space 160 and is clearance for the heads 198 when the third mold body 64' is moved toward the right, as viewed in Figure 8, to its other operating position as will be described below. When the third mold body is in this position, the pusher plate 152 may be actuated without engaging the heads 198.

As shown in Figure 9, the two ejector rails 136 straddle the second mold cavity 86' of the second mold body 62'. Note that the mold cavity 86' contains mold cores 188 in the usual manner. Similarly, the two ejector rails 138 straddle the third mold cavity 88'. Two pair of traveling ejector rail pins 210 extend vertically through holes 212 formed in the leg 82' of the second mold body 62' and include reduced diameters 214 that are threaded into holes in the ejector rails 136 so that their shoulders 216 are secured tightly against the under surfaces of the ejector rails. There are two ejector rail pins 210 attached to each ejector rail 140. Each ejector pin 210 includes an enlarged head 218 that extends into the space 160 vertically above the pusher plate 152, as shown in Figure 9. The holes 212 include counterbores 220 containing compression springs 222 that push against the enlarged heads 218 thereby urging the traveling ejector rail pins downwardly, as viewed in Figure 9, toward the pusher plate 152. As the pusher plate 152 is moved upwardly by the hydraulic cylinder 162 to actuate the ejector rails 134, the pusher plate engages the enlarged heads 218 and pushes the ejector rail pins and attached ejector rails 136 upwardly against the resistance of the springs 222, thereby ejecting the molded part from the mold cavity 86'. When the piston rod 164 is retracted, the springs 222 return the ejector rails 136 to their positions shown in Figure 9. Similarly, the leg 84' of the second mold body 62' includes two pair of ejector rail pins 210 disposed in counterbored holes 212, the pins having reduced diameters 214 in threaded engagement with holes in the ejector rails 138, two pins being attached to each rail. The reduced diameters 214 are threaded into the ejector rails 138 so that their shoulders 216 are secured tightly against the under surfaces of the ejector rails. The pins 210 include enlarged heads 218 that extend into a space 224 that is a lateral extension of the space 160 and is clearance for the heads 218 when the leg 84' of the second mold body 62' is in the position shown in Figure 9. When moving the second mold body 62' to its other operating position, as will be described below, the body 62' is moved toward the left, as viewed in Figure 9, until the leg 82' is moved out of position and the leg 84' occupies the position formerly occupied by the leg 82'. In this position, upon extension of the piston rod 164, the pusher plate 152 clears the heads 218 coupled to the leg 82' but engages the heads 218 coupled to the leg 84' so that the ejector rails 138 are extended to eject a molded part in the third mold cavity 88'.

During operation of the machine 10, the toggle clamp 22, shown in Figure 1, extends the B-side frame 16 toward the A-side frame 14 until the collective surfaces 132 sealingly engage the collective surfaces 130 with the mold cavities 70, 86, 88, and 104 in mutual mated engagement with respective mold cavities 70', 86', 88', and 104'. The mold machine 10 is capable of molding parts in four different configurations by rearranging the second and third mold bodies 62, 62', 64, and 64' by means of the fourteen actuators 90, 90', 92, 92', 94, 94', 106, 106', 108, 108', 110, 110', 112 and 112'. This rearranging of the mold bodies is referred to herein as reconfiguring the mold, and will now be described with reference to Figures 10 through 13, which schematically illustrate the various operating positions of the second and third mold bodies for the A-side and B-side mold assemblies. The views in these figures are shown from the perspective of the B-side as viewed in Figure 6 and, therefore, will be described in terms of the B-side only. It will be understood however that when a B-side actuator or mold body is referenced, the corresponding A-side actuator or mold body is also included so that the two should be considered as operating in pairs. That is, when the first actuator 90' of the B-side is operated, the first actuator 90 of the A-side is operated concurrently therewith.

As shown in Figure 10 the mold cavities 70', 104', and 86' are in mated engagement for molding a first part by operating the injection system 24. When it is desired to mold a second part utilizing the mold cavities 70', 104', and 88', the second mold body must be moved to the position shown in Figure 11. This is done by first opening the mold by operating the toggle clamp 22 and then operating the first actuator 90' to move the second mold body 62' away from the third mold body 64'. The second and third actuators 92' and 94' are operated to move the second mold body 62' downwardly, as viewed in Figure 11, so that the mold cavity 88' is in proper alignment with the mold cavity 104'. The first actuator 90' is then operated to move the second mold body 62' into mated engagement with the third mold body 64'. The toggle clamp 22 is then operated to close the mold and the injection system 24 operated to inject molten plastic into the mated mold cavities. When it is desired to mold a third part utilizing the mold cavities 70' and 88', the second and third mold bodies 62' and 64' must be moved to the position shown in Figure 12. This is done by first opening the mold by operating the toggle clamp 22 and then operating the first actuator 90' to move the second mold body 62' away from the third mold body 64'. The fourth and fifth actuators 106' and 108' are operated to move the third mold body 64' to the left, as viewed in Figure 11, out of engagement with the first mold body 60' and then the sixth and seventh actuators 110' and 112' are operated to move the third mold body upwardly so the opening 230, shown in Figure 11, is in centered alignment with first mold cavity 70'. The first actuator 90' is then operated to move the third mold body 64 to the right, as viewed in Figure 12, and the second mold body 62' into mated engagement with the first mold body 60', to the position shown in Figure 12, with the mold cavities 70' and 88' in mated engagement. When it is desired to mold a fourth part utilizing the mold cavities 70' and 86', the second mold body 62' must be moved to the position shown in Figure 13. This is done by first opening the mold by operating the toggle clamp 22 and then operating the first actuator 90' to move the second mold body 62' away from the third mold body 64'. The second and third actuators 92' and 94' are then operated to move the second mold body 62' upwardly, as viewed in Figure 12 until the second mold cavity 86' is in alignment with the first mold cavity 70'. The first actuator 90' is then operated to move the second mold body 62' into mated engagement with the first mold body 60', to the position shown in Figure 13, with the mold cavities 70' and 86' in mated engagement for molding a fourth part.

An important advantage of the present invention is that small complex parts, such as electrical connector housings, can be molded in a reconfigurable mold where ejector elements are required to remove the molded part. The present ejector elements are arranged in the movable mold bodies and travel therewith during reconfiguration so that they are operable in all operating positions of the movable mold bodies. The present traveling ejector elements are relatively simple in structure and permit rapid and automated reconfiguration of the mold. This is very beneficial when making relatively small quantities of different parts because machine down time is essentially eliminated.

## Claims

1. Apparatus for selectively molding one of a plurality of different molded parts, including a mold frame (12), an A-side frame (14) coupled to said mold frame, and a B-side frame (16) coupled to said mold frame; a first mold body (60, 60') and a second mold body (62, 62'), one of said first and second mold bodies (60, 60' and 62, 62') being selectably movable with respect to the other to a first position and to a second position where a third mold cavity (88, 88') is in communication with a first mold cavity (70, 70'),
the apparatus characterized by:
a traveling ejector (136, 138, 140, 190, 210, 202, and 222) arranged in said B-side portion of said movable mold body (60, 60' and 62, 62') and operable to eject said molded part when said one of said A-side frame and B-side frame has moved to said open position, said traveling ejector operable when said movable mold body is in both said first and second positions, including an actuator (94, 94') for effecting said operation of said traveling ejector.

2. The molding apparatus according to claim 1 characterized in that said traveling ejector includes an ejector member (136, 138, 140) arranged to slide within an opening in said movable mold body in a direction toward and away from said A-side frame (14), said ejector member having an ejector edge for engaging and ejecting said molded part when said traveling ejector is operated by said actuator (94, 94').

3. The molding apparatus according to claim 2 characterized in that said ejector member is a cylindrically shaped pin (190, 210) and said traveling ejector includes a resilient member (202, 222) arranged to urge said ejector member to slide within said opening in said direction away from said A-side frame (14).

4. The molding apparatus according to claim 3 characterized in that said movable mold body is said second mold body (62, 62') and said A-side and B-side portions thereof are slidingly coupled to said A-side and B-side frames (14, 16), respectively, for guiding said selective movement to said first and second positions.

5. The molding apparatus according to claim 4 characterized in that said actuator (94') includes a plate (152) coupled to said B-side frame for movement toward and away from said part line, said plate having a substantially flat abutting surface that is parallel to part line (130, 132) and in alignment with an ejector member (190, 210) so that upon said operation of said traveling ejector said plate (150) is caused to move toward said part line (130, 132), said abutting surface engaging and moving said ejector member (190, 210) toward said A-side frame (14) into ejecting engagement with said molded part.

6. The molding apparatus according to claim 5 characterized in that said actuator includes a linear actuator (94) coupled between said B-side frame (16) and said plate (150).

7. The molding apparatus according to claim 6 characterized in that said ejector edge is an edge of an elongated member (136, 138, 140) attached to said ejector member (190, 210) and arranged so that substantially the full length of said ejector edge engages an edge of said molded part during said ejection thereof.

8. The molding apparatus according to claim 7 characterized by another ejector edge of an elongated member (140, 140) attached to said ejector member (190, 210), said another ejector edge arranged opposite said ejector edge for engaging another edge of said molded part during said ejection thereof.

## Patentansprüche

1. Vorrichtung, um eines einer Vielzahl von verschiedenen Spritzgußteilen in selektiver Weise zu gießen, umfassend einen Gußform-Rahmen (12), einen A-Seiten-Rahmen (14), der mit dem Gußform-Rahmen verbunden ist, und einen B-Seiten-Rahmen (16), der mit dem Gußform-Rahmen verbunden ist; einen ersten Gußform-Körper (60, 60') und einen zweiten Gußform-Körper (62, 62'), wobei einer von dem ersten und zweiten Gußform-Körper (60, 60' und 62, 62') in selektiver Weise bezüglich dem anderen in eine erste Position und eine zweite Position bewegbar ist, wo ein dritter Gußform-Hohlraum (88, 88') in Verbindung mit einem ersten Gußform-Hohlraum (70, 70') steht,
wobei die Vorrichtung gekennzeichnet ist durch:
einen verfahrbaren Auswerfer (136, 138, 140, 190, 210, 202 und 222), der in dem B-Seiten-Bereich des bewegbaren Gußform-Körpers (60, 60' und 62, 62') angeordnet ist, und betätigt werden kann, um das Spritzgußteil auszuwerfen, wenn der eine von dem A-Seiten-Rahmen und dem B-Seiten-Rahmen in die offene Position bewegt wurde, wobei der verfahrbare Auswerfer betätigt werden kann, wenn der bewegbare Gußform-Körper in sowohl der ersten, als auch der zweiten Position ist, und einen Aktuator (94, 94') umfaßt, um die Betätigung des verfahrbaren Auswerfers auszuführen.

2. Spritzgußvorrichtung gemäß Anspruch 1, dadurch gekennzeichnet, daß der verfahrbare Auswerfer ein Auswerferelement (136, 138, 140) umfaßt, das ausgelegt ist, um in einer Öffnung in dem bewegbaren Gußform-Körper in einer zu dem A-Seiten-Rahmen (14) hin und von dem A-Seiten-Rahmen (14) weg weisenden Richtung zu gleiten, wobei das Auswerferelement einen Auswerferrand hat, um in das Spritzgußteil einzugreifen und das Spritzgußteil auszuwerfen, wenn der verfahrbare Auswerfer durch den Aktuator (94, 94') betätigt wird.

3. Spritzgußvorrichtung gemäß Anspruch 2, dadurch gekennzeichnet, daß das Auswerferelement ein zylinderförmiger Stift (190, 210) ist, und der verfahrbare Auswerfer ein elastisches Element (202, 222) umfaßt, das ausgelegt ist, um so auf das Auswerferelement zu drücken, daß das Auswerferelement in der Öffnung in der von dem A-Seiten-Rahmen (14) weg weisenden Richtung gleitet.

4. Spritzgußvorrichtung gemäß Anspruch 3, dadurch gekennzeichnet, daß der bewegbare Gußform-Körper der zweite Gußform-Körper (62, 62') ist, und der A-Seiten-Bereich und der B-Seiten-Bereich des zweiten Gußform-Körpers mit dem A-Seiten-Rahmen bzw. B-Seiten-Rahmen (14, 16) gleitend verbunden sind, um die selektive Bewegung nach der ersten und zweiten Position zu führen.

5. Spritzgußvorrichtung gemäß Anspruch 4, dadurch gekennzeichnet, daß der Aktuator (94') eine mit dem B-Seiten-Rahmen verbundene Platte (152) für die Bewegung zu der Teil-Linie hin, und von der Teil-Linie weg umfaßt, wobei die Platte eine im wesentlichen ebene, anliegende Oberfläche hat, die parallel zu der Teil-Linie (130, 132) ist, und entsprechend einem Auswerferelement (190, 210) ausgerichtet ist, so daß bei Betätigung des verfahrbaren Auswerfers die Platte (150) zu der Teil-Linie (130, 132) hin bewegt wird, wobei die anliegende Oberfläche in das Auswerferelement (190, 210) eingreift und das Auswerferelement (190, 210) zu dem A-Seiten-Rahmen (14) hin bewegt, bis es zum Auswerfen in das Spritzgußteil eingreift.

6. Spritzgußvorrichtung gemäß Anspruch 5, dadurch gekennzeichnet, daß der Aktuator einen linearen Aktuator (94) umfaßt, der zwischen dem B-Seiten-Rahmen (16) und der Platte (150) angeschlossen ist.

7. Spritzgußvorrichtung gemäß Anspruch 6, dadurch gekennzeichnet, daß der Auswerferrand ein Rand eines länglichen Elements (136, 138, 140) ist, das an dem Auswerferelement (190, 210) befestigt ist, und so ausgelegt ist, daß während der Auswerfung des Spritzgußteils im wesentlichen die volle Länge des Auswerferrandes in einen Rand des Spritzgußteils eingreift.

8. Spritzgußvorrichtung gemäß Anspruch 7, gekennzeichnet durch einen weiteren Auswerferrand eines länglichen Elements (140, 140), das an dem Auswerferelement (190, 210) befestigt ist, wobei der weitere Auswerferrand, der gegenüber dem Auswerferrand angeordnet ist, um während der Auswerfung des Spritzgußteils in einen weiteren Rand des Spritzgußteils einzugreifen.

## Revendications

1. Dispositif permettant de mouler de manière sélective une pièce moulée parmi plusieurs pièces moulées différentes, incluant un cadre de moule (12), un cadre de côté A (14) couplé audit cadre de moule et un cadre de côté B (16) couplé audit cadre de moule; un premier corps de moule (60, 60') et un second corps de moule (62, 62'), un desdits premier et second corps de moule (60, 60' et 62, 62') pouvant être déplacé de manière sélective par rapport à l'autre et amené dans une première position et dans une seconde position où un troisième creux de moule (88, 88') communique avec un premier creux de moule (70, 70'),
le dispositif étant caractérisé par:
un éjecteur mobile (136, 138, 140, 190, 210, 202 et 222) disposé dans ladite partie du côté B dudit corps de moule mobile (60, 60' et 62, 62') et pouvant être actionné pour éjecter ladite pièce moulée lorsque l'un desdits cadre de côté A et cadre de côté B s'est déplacé dans ladite position ouverte, ledit éjecteur mobile pouvant être actionné lorsque ledit corps de moule mobile se trouve dans les deux positions, la première et la seconde, incluant un dispositif de commande (94, 94') adapté pour faire fonctionner ledit éjecteur mobile.

2. Dispositif de moulage selon la revendication 1, caractérisé en ce que ledit éjecteur mobile inclut un élément d'éjecteur (136, 138, 140) disposé de manière à glisser à l'intérieur d'une ouverture dans ledit corps de moule mobile, dans une direction le rapprochant et l'éloignant dudit cadre de côté A (14), ledit élément d'éjecteur ayant une arête d'éjecteur adaptée pour entrer en contact avec ladite pièce moulée et éjecter celle-ci lorsque ledit éjecteur mobile est actionné par ledit dispositif de commande (94, 94').

3. Dispositif de moulage selon la revendication 2, caractérisé en ce que ledit élément d'éjecteur est une broche de forme cylindrique (190, 210) et ledit éjecteur mobile inclut un élément élastique (202, 222) disposé de manière à forcer ledit élément d'éjecteur à glisser à l'intérieur de ladite ouverture dans ladite direction l'éloignant dudit cadre de côté A (14).

4. Dispositif de moulage selon la revendication 3, caractérisé en ce que ledit corps de moule mobile est ledit second corps de moule (62, 62') et lesdites parties du côté A et du côté B de ce corps sont couplées de manière coulissante audits cadres de côté A et de côté B (14, 16), respectivement, afin de guider ledit mouvement sélectif pour passer dans lesdites première et seconde positions.

5. Dispositif de moulage selon la revendication 4, caractérisé en ce que ledit dispositif de commande (94') inclut une plaque (152) couplée audit cadre de côté B d'une manière permettant un mouvement la rapprochant et l'éloignant de ladite ligne de séparation, ladite plaque ayant une surface de butée essentiellement plate qui est parallèle à la ligne de séparation (130, 132) et alignée avec un élément d'éjecteur (190, 210) de manière à ce que, lors de l'actionnement dudit éjecteur mobile, ladite plaque (150) soit amenée à se déplacer vers ladite ligne de séparation (130, 132), ladite surface de butée entrant en contact avec ledit élément d'éjecteur (190, 210) et le déplaçant vers ledit cadre de côté A (14) de manière à ce qu'il entre en contact avec ladite pièce moulée pour l'éjecter.

6. Dispositif de moulage selon la revendication 5, caractérisé en ce que ledit dispositif de commande inclut un dispositif de commande linéaire (94) couplé entre ledit cadre de côté B (16) et ladite plaque (150).

7. Dispositif de moulage selon la revendication 6, caractérisé en ce que ladite arête d'éjecteur est une arête d'un élément allongé (136, 138, 140) attaché audit élément d'éjecteur (190, 210) et disposé de manière à ce que toute la longueur de ladite arête d'éjecteur, essentiellement, entre en contact avec une arête de ladite pièce moulée pendant l'éjection de cette dernière.

8. Dispositif de moulage selon la revendication 7, caractérisé par une autre arête d'éjecteur d'un élément allongé (140, 140) attaché audit élément d'éjecteur (190, 210), ladite autre arête d'éjecteur étant située à l'opposé de ladite arête d'éjecteur de manière à entrer en contact avec une autre arête de ladite pièce moulée pendant l'éjection de cette dernière.
